# EUROPÄISCHE PATENTANMELDUNG

(11) **EP 3 384 784 A1**
(43) Veröffentlichungstag der Anmeldung: **10.10.2018**
(21) Anmeldenummer: 18165946.7
(22) Anmeldetag: 05.04.2018
(51) Int. Cl.: A23L 19/12, A23L 29/212, A23B 7/005

(54) **VERFAHREN ZUR HERSTELLUNG EINES KARTOFFEL ENTHALTENDEN NAHRUNGSMITTELS**

(30) Priorität: 06.04.2017 AT 502832017
(71) Anmelder: Schwaighofer, Werner, 5571 Mariapfarr (AT)
(72) Erfinder: Schwaighofer, Werner, 5571 Mariapfarr (AT)
(74) Vertreter: Wirnsberger & Lerchbaum Patentanwälte OG

(57) **Zusammenfassung**

Die Erfindung betrifft ein Verfahren zur Herstellung eines Kartoffel enthaltenden Nahrungsmittels (12). Um ein auch für Allergiker gut verträgliches Nahrungsmittel (12) mit hoher mechanischer Stabilität zu erreichen, ist erfindungsgemäß vorgesehen, dass Kartoffel im ungekochten Zustand mit modifizierter Stärke und/oder einem Protein, insbesondere einem pflanzlichen Protein, vorzugsweise Erbsenfasern, vermengt werden, wonach ein sich dabei ergebendes Gemisch in eine Form gefüllt wird, wonach die Form luftdicht verschlossen wird, wonach die Form samt dem Gemisch auf eine Temperatur von 80 °C bis 140 °C gebracht wird.

Weiter betrifft die Erfindung ein in einem solchen Verfahren hergestelltes Nahrungsmittel (12).

## Beschreibung

Die Erfindung betrifft ein Verfahren zur Herstellung eines Kartoffel enthaltenden Nahrungsmittels.

Weiter betrifft die Erfindung ein in einem solchen Verfahren hergestelltes Nahrungsmittel.

Aus dem Stand der Technik sind verschiedene Verfahren der eingangs genannten Art zur Herstellung eines Kartoffel enthaltenden Nahrungsmittels sowie entsprechende Nahrungsmittel bekannt geworden. Nachteilig bei derartigen Verfahren und Nahrungsmitteln des Standes der Technik ist, dass zur Erreichung einer stabilen Konsistenz des Nahrungsmittels die Zugabe von Weizenmehl oder einem anderen Gluten enthaltenden Zusatz erforderlich ist, weswegen mit Verfahren des Standes der Technik erhaltene Nahrungsmittel nicht glutenfrei herstellbar sind. Solche Nahrungsmittel sind daher für Personen mit entsprechender Unverträglichkeit bzw. Allergien nicht genießbar.

Hier setzt die Erfindung an. Aufgabe der Erfindung ist es, ein Verfahren der eingangs genannten Art anzugeben, mit welchem ein entsprechendes Nahrungsmittel herstellbar ist, welches auch für Personen mit Glutenunverträglichkeit geeignet ist und eine hohe mechanische Stabilität aufweist, sodass das Nahrungsmittel stückweise verzehrbar ist.

Diese Aufgabe wird erfindungsgemäß durch ein Verfahren der eingangs genannten Art gelöst, wobei die Kartoffel im ungekochten Zustand mit modifizierter Stärke und/oder einem Protein, insbesondere Erbsenfasern, vermengt werden, wonach ein sich dabei ergebendes Gemisch in eine Form gefüllt wird, wonach die Form luftdicht verschlossen wird, wonach die Form samt dem Gemisch auf eine Temperatur von 80 °C bis 140 °C gebracht wird.

Im Rahmen der Erfindung wurde erkannt, dass bei Durchführung eines entsprechenden Verfahrens unter Zugabe von modifizierter Stärke und/oder einem Protein, insbesondere einem pflanzlichen Protein, vorzugsweise Erbsenfasern, auch dann ein Nahrungsmittel in stabiler Form erreichbar ist, wenn kein Gluten enthaltender Zusatz beigemengt wird. Das sich dabei ergebende Nahrungsmittel kann beispielsweise die Form einer Stange, einer Wurst oder dergleichen aufweisen und weist eine Stabilität ausreichend hohe Stabilität auf, sodass das fertige Nahrungsmittel in Scheiben geschnitten werden kann, welche nicht zerfallen, wie dies bei Nahrungsmitteln des Standes der Technik der Fall ist, die zerkleinerte Kartoffeln enthalten und glutenfrei ausgebildet sind. Die Scheiben können des Weiteren auch gebraten und als Hauptspeise oder Beilage optisch ansprechend angerichtet und anschließend verzehrt werden. Wenngleich das Nahrungsmittel bevorzugt glutenfrei hergestellt wird, kann dem Gemisch natürlich zusätzlich auch Weizenstärke oder eine andere glutenhaltige Stärke beigemengt werden, um beispielsweise einen bestimmte Geschmacksrichtung zu erreichen. Analog können dem Gemisch grundsätzlich auch künstliche Geschmacksverstärker beigemengt werden, wenngleich eine Herstellung ohne künstliche Geschmacksverstärker bevorzugt ist.

Es hat sich gezeigt, dass eine vorteilhafte Konsistenz auch bei Vermengung mit einem anderen, vorzugsweise pflanzlichen, Protein erreicht werden kann, beispielsweise mit Hanffasern oder Bambusfasern. Selbstverständlich kann alternativ oder ergänzend zu einem pflanzlichen Eiweiß oder modifizierter Stärke auch ein tierisches Eiweiß bzw. Protein beigemengt werden, um die günstige mechanische Stabilität zu erreichen. Üblicherweise wird ein kaltquellendes, pflanzliches oder tierisches Protein eingesetzt.

Eine besonders gute Konsistenz des Nahrungsmittels ist erreichbar, wenn das Gemisch auf eine Temperatur von 80 °C bis 97 °C gebracht, jedoch nie über eine Temperatur von 100 °C hinaus erhitzt wird.

Günstig ist es, wenn die Kartoffeln vor einem Vermengen mit der modifizierten Stärke und/oder dem Protein geschnitten werden. Dadurch kann sich die modifizierte Stärke besonders gleichmäßig im Gemisch verteilen, sodass eine homogene Masse mit gleichmäßiger Stabilität erreicht wird.

Vorteilhaft ist es, wenn die Kartoffeln in Streifen geschnitten werden, wobei die Streifen einen etwa rechteckförmigen, insbesondere quadratischen, Querschnitt aufweisen, wobei eine Kantenlänge des Querschnittes vorzugsweise etwa 1 mm bis 50 mm, insbesondere 3 mm bis 20 mm, beträgt. Dadurch ist eine besonders gleichmäßige Verteilung der modifizierten Stärke und/oder der Erbsenfasern in Gemisch möglich, sodass sich ein Nahrungsmittel mit homogener Stabilitätsverteilung ergibt. Eine Länge der Streifen beträgt üblicherweise 1 mm bis 100 mm, vorzugsweise etwa 60 mm. Beispielsweise können die Kartoffeln in Würfel mit einer Seitenlänge von 3 mm, in Streifen mit einem quadratischen Querschnitt und einer Kantenlänge von 3 mm oder 20 mm sowie einer Länge von 60 mm geschnitten werden.

Um im Nahrungsmittel verschiedene Geschmacksrichtungen zu erreichen, ist es günstig, wenn den Kartoffeln Zutaten wie Gemüse und/oder Käse oder dergleichen beigemengt werden, bevor das Gemisch in die Form gefüllt wird. Dadurch werden die Zutaten stabil in die zerkleinerten Kartoffeln eingebunden.

Beispielsweise kann eine Zusammensetzung des Gemisches eine, mehrere oder sämtliche der in nachfolgender Tabelle angegebenen Zutaten in der angegebenen Konzentration bzw. dem angegebenen Gewicht bezogen auf 1 kg Kartoffeln beinhalten oder aus den in der Tabelle angegebenen Bestandteilen bestehen:

| **Bestandteil** | **Menge** |
|---|---|
| Kartoffeln | 1.000 g |
| Karotten | 50 g bis 200 g |
| Mais- oder Kartoffelstärke | 10 g bis 200 g |
| Petersilie | 0,5 g bis 10 g |
| Kurkuma | 0,1 g bis 10 g |
| Röstzwiebel, glutenfrei | 1 g bis 100 g |
| Suppengewürz | 1 g bis 100 g |
| Salz | 1 g bis 30 g |
| Thymian | 0,1 g bis 30 g |
| Kümmel | 0,1 g bis 30 g |
| Sellerie | 50 g bis 200 g |
| Liebstöckel | 0,1 g bis 30 g |
| Muskat | 0,1 g bis 10 g |
| Rote Linsen | 10 g bis 300 g |
| Berglinsen | 10 g bis 300 g |
| Graumohn | 10 g bis 300 g |
| Käferbohnen | 10 g bis 300 g |
| Kichererbsen | 10 g bis 300 g |
| Kürbiskerne | 10 g bis 300 g |
| Bockshornklee | 5 g bis 200 g |
| Lauch | 10 g bis 100 g |
| Mais | 10 g bis 300 g |
| Chili | 0,1 g bis 50 g |
| Bärlauch | 0,1 g bis 50 g |
| Oregano | 0,1 g bis 50 g |
| Buchweizen | 0,1 g bis 100 g |
| Erbsenfaser | 0,1 g bis 300 g |
| Tomaten, getrocknet | 1 g bis 100 g |
| Oliven, getrocknet | 1 g bis 100 g |
| Apfel, getrocknet | 1 g bis 300 g |
| Käsewürfel 5 mm | 1 g bis 300 g |
| Erdbeere, getrocknet | 1 g bis 200 g |
| Haselnüsse geschält | 10 g bis 100 g |
| Mandeln, geschält | 10 g bis 100 g |

Es versteht sich, dass bei einer geänderten Menge an Kartoffeln, die Mengen der weiteren Bestandteile entsprechend anzupassen sind.

Üblicherweise werden die Kartoffeln vor einem Vermengen mit der modifizierten Stärke und/oder dem Protein geschält, um ein einfaches Verfahren zu erreichen, wobei im Nahrungsmittel keine Schale der Kartoffeln enthalten ist.

Zur Vermeidung einer Verunreinigung des Nahrungsmittels ist es günstig, wenn die Kartoffeln vor einem Vermengen mit der modifizierten Stärke und/oder dem Protein gewaschen werden.

Üblicherweise wird als modifizierte Stärke eine kaltquellende modifizierte Stärke eingesetzt, beispielsweise ein unter dem Handelsnamen AGRANA QUEMINA 21.257 erhältliches Produkt.

Eine hohe Stabilität des Nahrungsmittels kann bei einem gleichzeitig einfachen Verfahren erreicht werden, wenn als modifizierte Stärke modifizierte kaltquellende Maisstärke oder Kartoffelstärke eingesetzt wird.

Zur Erreichung einer besonders hohen Stabilität des Nahrungsmittels ist es günstig, wenn ein Gewichtsverhältnis der modifizierten Stärke zu den Kartoffeln 1 g modifizierte Stärke je 1 kg Kartoffeln bis 100 g modifizierte Stärke je 1 kg Kartoffeln beträgt. Üblicherweise wird modifizierte Stärke in einer Konzentration von 10 g bis 50 g, insbesondere etwa 20 g, je 1.000 g Kartoffeln beigemengt.

Günstig ist es, wenn mit den Kartoffeln Erbsenfasern vermengt werden, wobei ein Gewichtsverhältnis der Erbsenfasern zu den Kartoffeln bevorzugt 1 g Erbsenfasern je 1 kg Kartoffeln bis zu 100 g Erbsenfasern je 1 kg Kartoffeln beträgt. Dadurch wird eine vorteilhafte Stabilität des Nahrungsmittels erzielt.

Das erhaltene Gemisch kann grundsätzlich in jede Form gefüllt werden, sodass das Nahrungsmittel jede beliebige Form einnehmen kann. Es hat sich jedoch bewährt, dass die Form ein flexibler Kunststoffschlauch, insbesondere ein Kunststoffdarm, ist, wobei ein Durchmesser vorzugsweise 10 mm bis 300 mm, insbesondere 20 mm bis 160 mm, beträgt. Dies ermöglicht eine effiziente Umsetzung des Verfahrens, wobei ein Erhitzen des Gemisches in der Form mit gleichmäßiger Temperaturverteilung im Gemisch möglich ist. Aufgrund der Flexibilität des Kunststoffdarmes ergibt sich auch nach einem Abkühlen des Nahrungsmittels eine glatte und somit optisch ansprechende Oberfläche, weswegen die Form auch sogleich eine Verpackung des Nahrungsmittels bilden kann. Dadurch wird ferner ein sehr effizientes Verfahren erreicht, wobei keine gesonderte Verpackung erforderlich ist.

Um eine besonders homogene Verteilung der modifizierten Stärke im Gemisch zu erreichen, ist es günstig, wenn die Form unter einem Überdruck von 0,01 bar bis 3 bar, vorzugsweise 0,1 bar bis 0,5 bar, befüllt wird.

Günstig ist es, wenn das Gemisch in der Form pasteurisiert wird. Nachdem das Gemisch in der Form luftdicht verschlossen ist, wird dadurch eine besonders lange Haltbarkeit des Nahrungsmittels erreicht. Eine für das Pasteurisieren erforderliche Temperatur und Pasteurisierzeit können dabei auch abhängig von einem Druck sein, unter welchem das Pasteurisieren erfolgt. Mit Vorteil erfolgt ein Erhitzen bis zu einer Temperatur von etwa 80 °C bis 97 °C, vorzugsweise 85 °C bis 87 °C, um das Nahrungsmittel haltbar zu machen und gleichzeitig eine vorteilhafte Konsistenz zu erreichen.

Vorteilhaft ist es, wenn das Gemisch in der Form gekocht wird. Dadurch wird ein unmittelbar verzehrbares Nahrungsmittel erreicht. Dies kann auch bei einem Unterdruck erfolgen, beispielsweise in einem Autoklaven, sodass der Kochvorgang bereits bei weniger als 100 °C erfolgen kann, beispielsweise bei 90 °C bis 97 °C, insbesondere etwa 93 °C, um ein sehr schonendes Verfahren zu erreichen, wobei natürliche Geschmacksstoffe besonders gut erhalten bleiben.

Günstig ist es, wenn das Kochen unter einem Überdruck erfolgt, beispielsweise in einem Autoklaven. Das Gemisch kann dann bei mehr als 100 °C gekocht werden, beispielsweise bei 100 °C bis 140 °C, insbesondere etwa 115 °C. Dadurch wird das Gemisch rascher gar bzw. durch als bei einer Temperatur von unter 100 °C und normalem Druck.

Es hat sich bewährt, dass das Gemisch in der Form unter Dampf oder unter einem Unterdruck auf eine Temperatur von 80 °C bis 140 °C gebracht wird. Dies führt einerseits zu einer vorteilhaften Haltbarkeit des Nahrungsmittels. Andererseits ergibt sich dabei eine gute Vermischung der Kartoffeln mit der modifizierten Stärke in der Form, sodass ein Nahrungsmittel mit hoher mechanischer Stabilität erreicht wird. Beispielsweise kann das Gemisch in der Form in einem Autoklav angeordnet und unter Über- oder Unterdruck auf eine gewünschte Temperatur gebracht werden.

Üblicherweise wird das Gemisch in der Form für eine Kochzeit von 5 Minuten bis 150 Minuten auf einer Temperatur von 80 °C bis 140 °C gehalten, um eine Nahrungsmittel mit vorteilhaft stabiler Konsistenz zu erreichen.

Die Erfindung betrifft darüber hinaus ein in einem erfindungsgemäßen Verfahren hergestelltes Nahrungsmittel. Ein derartiges Nahrungsmittel kann rein pflanzlich und glutenfrei hergestellt werden, sodass dieses insbesondere für Personen mit entsprechender Unverträglichkeit geeignet ist.

Das fertige Nahrungsmittel kann auf verschiedenste Weise für einen Verzehr zubereitet werden, beispielsweise unmittelbar in Scheiben geschnitten und verzehrt oder vor einem Verzehr gebraten werden. Nachdem das Nahrungsmittel bereits vorgekocht ist, ist ein Kochen des fertigen Nahrungsmittels vor einem Verzehr nicht mehr erforderlich.

Grundsätzlich kann das Nahrungsmittel mit oder ohne einer Gluten enthaltenden Zutat sowie gegebenenfalls auch mit künstlichen Geschmacksverstärkern ausgebildet sein, um beliebige Geschmacksrichtungen zu erreichen.

Das Nahrungsmittel ist allerdings bevorzugtvollkommen glutenfrei ausgebildet. Ferner kann das Nahrungsmittel ohne Geschmacksverstärker ausgebildet sein. Nachdem das erfindungsgemäße Verfahren sehr schonen für die natürlichen Inhaltsstoffe ist, bleiben die natürlichen Geschmacksstoffe erhalten, sodass keine Geschmacksverstärker benötigt werden.

Mit Vorteil bildet die Form die Verpackung des Nahrungsmittels. Dies hat sich für eine lange Haltbarkeit bewährt, weil das Gemisch in der Form üblicherweise pasteurisiert und luftdicht verschlossen ist. Es ist somit keine gesonderte Verpackung erforderlich. Besteht die Verpackung aus einem Kunststoffdarm, wird diese vor einem Verzehr des Nahrungsmittels einfach vom üblicherweise stangen- bzw. wurstförmigen Nahrungsmittel getrennt.

Weitere Merkmale, Vorteile und Wirkungen der Erfindung ergeben sich anhand des nachfolgend dargestellten Ausführungsbeispiels. In der Zeichnung, auf welche dabei Bezug genommen wird, zeigt:
Fig. 1 ein Flussdiagramm eines erfindungsgemäßen Verfahrens;
Fig. 2 ein in einem erfindungsgemäßen Verfahren hergestelltes Nahrungsmittel.

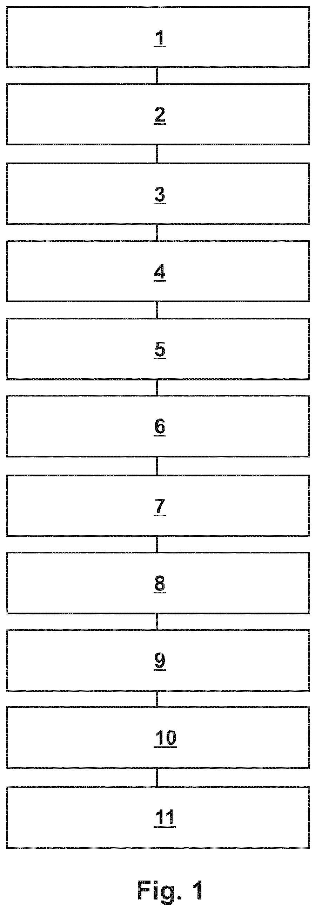

Fig. 1 zeigt ein Flussdiagramm eines erfindungsgemäßen Verfahrens zur Herstellung eines Kartoffel enthaltenden Nahrungsmittels 12. Dabei werden rohe, ungeschälte Kartoffel bereitgestellt und in einem ersten Schritt 1 gewaschen, wonach die Kartoffel in einem zweiten Schritt 2 geschält werden, wonach die Kartoffel in einem dritten Schritt 3 geschnitten werden. Die Kartoffel können hierbei beispielsweise in kleine Würfel mit einer Kantenlänge von 3 mm geschnitten werden. In einem weiteren, vierten Verfahrensschritt 4 werden die Kartoffeln mit verschiedenen Zutaten 14 vermengt. Aufgrund unterschiedlicher Zutaten 14 sind hier verschiedenste Variationen des erfindungsgemäßen Nahrungsmittels 12 möglich. Beispielsweise können die Kartoffel mit Gemüse oder Käse vermengt werden.

Nach einem Beimengen der Zutaten 14 werden dem Gemisch modifizierte kaltquellende Mais- oder Kartoffelstärke und/oder Erbsenfasern in einem fünften Verfahrensschritt 5 beigemengt. Üblicherweise wird modifizierte kaltquellende Mais- oder Kartoffelstärke bei einer Konzentration von 1 g bis 100 g je einem 1 kg Kartoffeln beigemengt.

Eine Zusammensetzung des Gemisches nach diesem Verfahrensschritt und somit eine Zusammensetzung des Nahrungsmittels 12 kann bezogen auf 1 kg Kartoffeln beispielsweise folgende Inhaltsstoffe aufweisen oder ausschließlich aus folgenden Inhaltsstoffen bestehen, um eine hohe Stabilität bei gleichzeitig guter Verträglichkeit für Allergiker zu erreichen:

| | Menge |
|---|---|
| Kartoffeln | 1.000 g |
| Karotten | 100 g |
| Mais- oder Kartoffelstärke | 100 g |
| Petersilie | 2 g |
| Kurkuma | 1 g |
| Röstzwiebel, glutenfrei | 30 g |
| Suppengewürz | 15 g |
| Salz | 7 g |
| Thymian | 1 g |
| Kümmel | 2 g |
| Sellerie | 10 g |
| Liebstöckel | 2 g |
| Muskat | 0,5 g |
| Rote Linsen | 100 g |
| Berglinsen | 100 g |
| Graumohn | 100 g |
| Käferbohnen | 100 g |
| Kichererbsen | 100 g |
| Kürbiskerne | 100 g |
| Bockshornklee | 20 g |
| Lauch | 30 g |
| Mais | 100 g |
| Chili | 5 g |
| Bärlauch | 5 g |
| Oregano | 5 g |
| Buchweizen | 50 g |
| Erbsenfaser | 120 g |
| Tomaten, getrocknet | 30 g |
| Oliven, getrocknet | 30 g |
| Apfel, getrocknet | 100 g |
| Käsewürfel 5 mm | 200 g |
| Erdbeere, getrocknet | 100 g |
| Haselnüsse geschält | 50 g |
| Mandeln, geschält | 50 g |

In einem weiteren sechsten Verfahrensschritt 6 wird das im fünften Verfahrensschritt 5 erhaltene Gemisch in eine Füllvorrichtung eingefüllt. Derartige Fülleinrichtungen sind beispielsweise zur Herstellung von Wurstwaren bekannt. Anschließend wird das Gemisch in einem siebenten Verfahrensschritt 7 mit der Füllvorrichtung in einen Kunststoffdarm 13 unter einem Überdruck von 0,01 bar bis 3 bar eingefüllt.

In einem weiteren achten Verfahrensschritt 8 wird der mit dem Gemisch befüllte Darm luftdicht verschlossen, sodass das Gemisch luftdicht im Darm eingeschlossen ist. Üblicherweise ist das Gemisch bis zu diesem Verfahrensschritt noch ungekocht. Nachdem die Kartoffeln im Verfahren somit nur einmal erhitzt werden müssen, ist das Verfahren sehr energieeffizient.

In einem weiteren neunten Verfahrensschritt 9 wird das Gemisch im Darm in einem Temperaturbereich zwischen 80 °C und 140 °C gekocht, wobei eine Kochzeit je nach Kochverfahren zwischen 5 Minuten und 150 Minuten betragen kann. Dabei wird das Gemisch im Darm auch pasteurisiert und somit haltbar gemacht. Der Darm bildet somit sogleich die Verpackung des Nahrungsmittels 12, sodass eine gesonderte Verpackung nicht erforderlich ist. Üblicherweise wird das Gemisch bei normalem Umgebungsdruck und einer Temperatur von 85 °C gekocht.

Anschließend wird das im Darm befindliche Nahrungsmittel 12 in einem zehnten Verfahrensschritt 10 abgekühlt. In weiterer Folge erfolgt in einem elften Verfahrensschritt 11 eine Etikettierung des Nahrungsmittels 12. Bei einem Verkauf wird das Nahrungsmittel üblicherweise gekühlt transportiert und gelagert.

Normalerweise wird als Darm eine elastische Kunststofffolie verwendet. Üblicherweise dehnt sich das Gemisch in der Form bei einem Erhitzen aus und schrumpft bei einem anschließenden Abkühlen. Nur wenn sich auch die Form bzw. die elastische Kunststofffolie ebenfalls entsprechend ausdehnt und schrumpft, ergibt sich auch nach Abkühlen des Nahrungsmittels 12 eine optisch ansprechende glatte Oberfläche des Nahrungsmittels 12, sodass die Form sogleich als Verpackung verwendbar ist.

Ein erfindungsgemäß erhaltenes Nahrungsmittel 12 ist üblicherweise glutenfrei und weist dennoch eine hohe mechanische Stabilität auf, sodass das Nahrungsmittel 12 auch dann nicht zerfällt, wenn dieses in Scheiben geschnitten und gebraten wird. Ein erfindungsgemäß hergestelltes Nahrungsmittel kann daher optisch ansprechend angerichtet werden.

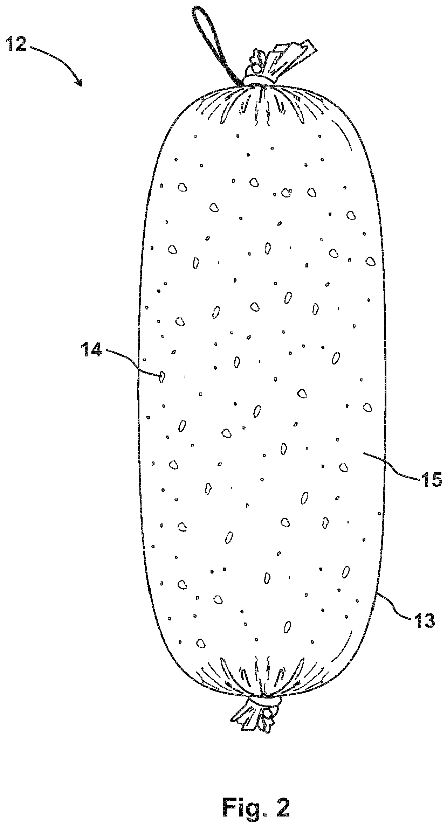

Fig. 2 zeigt ein in einem erfindungsgemäßen Verfahren hergestelltes Nahrungsmittel 12. Wie ersichtlich weist das Nahrungsmittel 12 etwa die Form einer Wurst bzw. einer Stange auf. Dabei ist die im fünften Verfahrensschritt 5 erhaltene Mischung bzw.
Kartoffelmasse 15 durch die als transparenter Kunststoffdarm 13 ausgebildete Form hindurch ersichtlich. Die Mischung ist im Kunststoffdarm 13 luftdicht eingeschlossen, welcher auch die Verpackung des Nahrungsmittels bildet. Durch den transparenten Kunststoffdarm 13 hindurch sind die Kartoffelmasse sowie die in der Kartoffelmasse 15 enthaltenen Zutaten 14, beispielsweise Karotten oder Nüsse, ersichtlich. Aufgrund der Beimengung von modifizierter Stärke oder Erbsenfasern ist das Nahrungsmittel 12 mechanisch stabil und kann beispielsweise in Scheiben geschnitten und unmittelbar verzehrt oder vor einem Verzehr gebraten werden, ohne dass entsprechende Scheiben zerfallen.

Mit einem erfindungsgemäßen Verfahren ist ein glutenfreies Nahrungsmittel 12 mit hoher Stabilität herstellbar, sodass das Kartoffel enthaltende Nahrungsmittel 12 in unterschiedlichsten Geschmacksrichtungen hergestellt und als Hauptspeise sowie als Beilage ansprechend angerichtet werden kann. Ferner ist es bei einem erfindungsgemäß hergestellten Nahrungsmittel 12 nicht erforderlich, Geschmacksverstärkter beizumengen, da die natürlichen Geschmacksstoffe bei der schonenden Herstellung erhalten bleiben. Es ergibt sich somit ein optisch ansprechendes natürliches, üblicherweise rein pflanzliches, und für Allergiker geeignetes Nahrungsmittel, welches auf Kartoffeln basiert.

## Patentansprüche

1. Verfahren zur Herstellung eines Kartoffel enthaltenden Nahrungsmittels (12), **dadurch gekennzeichnet, dass** Kartoffel im ungekochten Zustand mit modifizierter Stärke und/oder einem Protein, insbesondere einem pflanzlichen Protein, vorzugsweise Erbsenfasern, vermengt werden, wonach ein sich dabei ergebendes Gemisch in eine Form gefüllt wird, wonach die Form luftdicht verschlossen wird, wonach die Form samt dem Gemisch auf eine Temperatur von 80 °C bis 140 °C gebracht wird.

2. Verfahren nach Anspruch 1, **dadurch gekennzeichnet, dass** die Kartoffel vor einem Vermengen mit der modifizierten Stärke und/oder dem Protein geschnitten werden.

3. Verfahren nach Anspruch 2, **dadurch gekennzeichnet, dass** die Kartoffel in Streifen geschnitten werden, wobei die Streifen einen etwa rechteckförmigen, insbesondere quadratischen, Querschnitt aufweisen, wobei eine Kantenlänge des Querschnittes vorzugsweise etwa 1 mm bis 50 mm, insbesondere 3 mm bis 20 mm, beträgt.

4. Verfahren nach einem der Ansprüche 1 bis 3, **dadurch gekennzeichnet, dass** den Kartoffeln Zutaten (14) wie Gemüse und/oder Käse oder dergleichen beigemengt werden, bevor das Gemisch in die Form gefüllt wird.

5. Verfahren nach Anspruch 1 oder 4, **dadurch gekennzeichnet, dass** die Kartoffel vor einem Vermengen mit der modifizierten Stärke und/oder dem Protein geschält werden.

6. Verfahren nach einem der Ansprüche 1 bis 5, **dadurch gekennzeichnet, dass** die Kartoffel vor einem Vermengen mit der modifizierten Stärke und/oder dem Protein gewaschen werden.

7. Verfahren nach einem der Ansprüche 1 bis 6, **dadurch gekennzeichnet, dass** als modifizierte Stärke modifizierte kaltquellende Maisstärke oder Kartoffelstärke eingesetzt wird.

8. Verfahren nach einem der Ansprüche 1 bis 7, **dadurch gekennzeichnet, dass** ein Gewichtsverhältnis der modifizierten Stärke zu den Kartoffeln 1 g modifizierte Stärke je 1 kg Kartoffeln bis 100 g modifizierte Stärke je 1 kg Kartoffeln beträgt und/oder dass mit den Kartoffeln Erbsenfasern vermengt werden, wobei ein Gewichtsverhältnis der Erbsenfasern zu den Kartoffeln bevorzugt 1 g Erbsenfasern je 1 kg Kartoffel bis zu 100 g Erbsenfasern je 1 kg Kartoffeln beträgt.

9. Verfahren nach einem der Ansprüche 1 bis 8, **dadurch gekennzeichnet, dass** das Gemisch in der Form pasteurisiert wird.

10. Verfahren nach einem der Ansprüche 1 bis 9, **dadurch gekennzeichnet, dass** das Gemisch in der Form gekocht wird.

11. Verfahren nach einem der Ansprüche 1 bis 10, **dadurch gekennzeichnet, dass** das Gemisch in der Form unter Dampf oder unter einem Unterdruck auf eine Temperatur von 80 °C bis 140 °C gebracht wird.

12. Verfahren nach einem der Ansprüche 1 bis 11, **dadurch gekennzeichnet, dass** das Gemisch in der Form für eine Kochzeit von fünf Minuten bis 150 Minuten auf einer Temperatur von 80 °C bis 140 °C gehalten wird.

13. Nahrungsmittel (12), hergestellt in einem Verfahren nach einem der Ansprüche 1 bis 12.

14. Nahrungsmittel (12) nach Anspruch 13, **dadurch gekennzeichnet, dass** das Nahrungsmittel (12) glutenfrei ist.

15. Nahrungsmittel (12) nach Anspruch 13 oder 14, **dadurch gekennzeichnet, dass** das Nahrungsmittel (12) keine Geschmacksverstärker enthält.
